**Europäisches Patentamt**

**European Patent Office**

**Office européen des brevets**

(19)

(11) Numéro de publication : **0 408 433 B1**

# (12) FASCICULE DE BREVET EUROPEEN

(45) Date de publication du fascicule du brevet :
**29.09.93 Bulletin 93/39**

(51) Int. Cl.⁵ : **C08F 220/34, C08F 220/06**

(21) Numéro de dépôt : **90401964.3**

(22) Date de dépôt : **06.07.90**

---

(54) **Polymères hydrophiles ampholytes, leur procédé de préparation et leur application comme agent absorbant.**

---

(30) Priorité : **12.07.89 FR 8909408**

(43) Date de publication de la demande :
**16.01.91 Bulletin 91/03**

(45) Mention de la délivrance du brevet :
**29.09.93 Bulletin 93/39**

(84) Etats contractants désignés :
**AT BE CH DE DK ES FR GB GR IT LI LU NL SE**

(56) Documents cités :
**FR-A- 2 316 263**
**FR-A- 2 353 576**

(56) Documents cités :
**CHEMICAL ABSTRACTS, vol. 100, no. 18, 1984, page 58, résumé no. 140458p, Columbus, Ohio, US ; & JP-A-58 154 710 (KYORITSU ORGANIC INDUSTRIAL RESEARCH LABORATORY) 14-09-1983**

(73) Titulaire : **SOCIETE FRANCAISE HOECHST TOUR ROUSSEL HOECHST 1 Terrasse Bellini F-92800 Puteaux (FR)**

(72) Inventeur : **Mallo, Paul**
**290, avenue Napoléon Bonaparte F-92500 Rueil Malmaison (FR)**

(74) Mandataire : **Rinuy, Santarelli 14, avenue de la Grande Armée F-75017 Paris (FR)**

EP 0 408 433 B1

---

## Description

La présente invention concerne des polymères hydrophiles ampholytes, leur procédé de préparation et leur application comme agent absorbant.

Les polymères hydrophiles, insolubles dans l'eau mais gonflables à l'eau sont largement utilisés dans la fabrication de certains articles d'hygiène destinés notamment à la rétention d'urine. Ces polymères, à base principalement d'acide acrylique combiné éventuellement à un monomère à groupement aminé (brevet français n° 2.316.263 et demande de brevet japonais n° 58(83)-154708), présentent un fort pouvoir d'absorption d'eau pure, mais cette propriété est considérablement réduite lorsque l'eau contient des sels de métaux alcalins et elle s'effondre en présence de sels de métaux. alcalino-terreux tels que le chlorure de calcium. Il est également connu des polymères hydrophiles présentant des propriétés bactériostatiques à base notamment d'acide acrylique et d'un ester d'acide alpha éthylénique à groupement ammonium quaternaire terminal (brevet français n° 2.353.576).

Or, pour certaine applications, on recherche des polymères hydrophiles insolubles dans l'eau et dont le pouvoir d'absorption d'eau soit insensible ou peu perturbé par la présence d'électrolytes minéraux de quelque nature que ce soit, aussi bien des sels de métaux alcalins que des sels de métaux alcalino-terreux.

Or, la Demanderesse a découvert avec étonnement que de nouveaux polymères hydrophiles ampholytes, insolubles dans l'eau et gonflables à l'eau présentaient cette propriété. Ces polymères, selon l'invention, sont caractérisés en ce qu'ils contiennent, à l'état polymérisé, en proportions molaires de 0,001 à 0,1% d'un monomère réticulant diéthylénique hydrosoluble et de 99,999 à 99,9% d'un mélange constitué de 1 à 99 % d'acrylate de N,N-diméthylaminoéthyle salifié ou quaternisé et de 99 à 1% d'un mélange désigné M, de 1 à 99 % d'acide acrylique et de 99 à 1 % d'acrylate d'ammonium, d'acrylate de sodium ou d'acrylate de potassium.

L'expression acrylate de N,N-diméthylaminoéthyle salifié ou quaternisé peut désigner, par exemple, l'acrylate de N,N-diméthylaminoéthyle salifié par l'acide chlorydrique, désigné ci-après CHA, ou de préférence quaternisé soit par le chlorure de méthyle, désigné après CMA, soit par le sulfate de diméthyle, désigné ci-après MSA.

L'expression "monomère réticulant diéthylénique hydrosoluble" désigne un monomère polymérisable diéthylénique, soluble dans l'eau et possédant au moins une fonction carboxylique libre ou salifiée soit par de l'ammoniac, soit par du sodium ou du potassium. Parmi les monomères réticulants répondant à cette définition, on choisira plus particulièrement l'acide bisacrylamidoacétique, désigné ci-après ABAA, l'acide diallyloxyacétique, désigné ci-après DIOXOLA, ou un de leurs sels d'ammonium, de sodium ou de potassium, tels que le bisacrylamidoacétate de sodium, désigné BAANa, le bisacrylamidoacétate de potassium, désigné BAAK, le diallyloxyacétate de sodium, désigné DAANa, le diallyloxyacétate de potassium, désigné DAAK. L'acide diallyloxyacétique est décrit par la Demanderesse dans la demande de brevet français n° 89.07894 déposée le 14 Juin 1989.

L'invention a plus particulièrement pour objet les polymères tels que définis ci-dessus, caractérisé en ce que le mélange M contient de 20 à 50 % d'acide acrylique, avantageusement de 20 à 40 % et préférentiellement de 24 à 32 %.

Parmi ces derniers polymères, l'invention a notamment pour objet les polymères ci-dessus, caractérisés en ce que le monomère réticulant est choisi dans le groupe constitué par l'acide bisacrylamidoacétique, l'acide diallyloxyacétique et leurs sels d'ammonium, de sodium ou de potassium. Parmi les polymères de la présente invention, on peut citer plus particulièrement les polymères contenant en proportions molaires, à l'état polymérisé, de 0,01 à 0,1% d'acide bisacrylamidoacétique ou d'acide diallyloxyacétique ou un de leurs sels d'ammonium, de sodium ou de potassium et de 99,99 à 99,9 % d'un mélange de 30 à 80% de N,N-diméthylaminoéthyle salifié ou quaternisé notamment à l'état de CMA ou de MSA, et de 70 à 20% d'un mélange de 80 à 60%, notamment de 76 à 68% d'acrylate de potassium désigné ci-après AAK, et de 20 à 40%, particulièrement de 24 à 32%, d'acide acrylique désigné ci-après AA.

Dans la suite du texte, les proportions en pourcentage des différents monomères dans les mélanges ou dans les polymères seront toujours exprimées en moles. Ainsi, un copolymère obtenu à partir de 69,9% en moles de CMA, 9% en moles d'acide acrylique, 21% en moles d'acrylate de potassium et de 0,1% en moles d'acide bisacrylamidoacétique sera représenté par CMA/AA/AK/ABAA-69,9/9/21/0,1. On sait que l'acide acrylique possède un pKa d'environ 4,25 et que l'acide bisacrylamidoacétique ainsi que l'acide diallyloxyacétique ont un pKa d'environ 2,9, si bien que lorsqu'on utilise ces acides réticulants, ils se salifient partiellement ou totalement en déplaçant l'acide acrylique de son sel. Par convention, afin de simplifier l'écriture, et en raison des faibles doses utilisées, on considère que ces acides réticulants restent sous leur forme non salifiée.

La présente invention a également pour objet un procédé d'obtention des polymères ci-dessus décrits, caractérisé en ce que l'on effectue la polymérisation des monomères choisis en suspension à une température supérieure à 50°C dans une phase organique non miscible à l'eau mais formant un azéotrope avec l'eau, en présence d'un initiateur de polymérisation hydrosoluble et d'un colloïde protecteur, puis en fin de polymérisation l'on réalise une déshydratation azéotropique du milieu réactionnel et isole par filtration les polymères recherchés.

Dans des conditions préférentielles de mise en oeuvre du procédé ci-dessus décrit, l'on introduit la solution aqueuse des monomères choisis à une concentration voisine de 50 % en poids et contenant de 30 à 300 mmoles d'un initiateur de polymérisation hydrosoluble pour 100 moles de monomères dans une phase organique à l'ébullition, de préférence du cyclohexane, contenant de 0,5 à 2 % en poids par rapport au poids des monomères de colloïde protecteur, et le rapport pondéral phase aqueuse à phase organique est compris entre 0,9 et 1,1.

Le procédé décrit ci-dessus est avantageusement réalisé dans les conditions suivantes :
- la solution aqueuse contenant les monomères choisis contenant éventuellement l'initiateur de polymérisation est introduite lentement, sous agitation et en atmosphère inerte dans la phase organique;
- la solution aqueuse contenant les monomères choisis et éventuellement un initiateur de polymérisation hydrosoluble contient en outre un agent séquestrant tel que l'acide diéthylenetriaminopentaacétique;
- l'introduction de la phase aqueuse dans la phase huile est réalisée en 90 minutes environ;
- le colloïde protecteur est une éthylcellulose contenant de 40 à 50 % de groupement éthoxylés, à la dose de 0,5 à 2% en poids par rapport au poids des monomères;
- la concentration des monomères dans la phase aqueuse est supérieure à 30% en poids, et avantageusement elle est voisine de 50% en poids;
- le rapport pondéral phase huile sur phase aqueuse est compris entre 0,9 et 1,1;
- l'initiateur, dissous dans la phase aqueuse, est utilisé à la dose de 30 à 300 mmoles pour 100 moles de monomères;
- l'initiateur est du persulfate de sodium ou du persulfate de potassium.

Les polymères selon l'invention présentent d'intéressantes propriétés absorbantes de fluides aqueux; ils manifestent notamment un fort pouvoir absorbant de solutions aqueuses contenant des sels minéraux hydrosolubles, aussi bien des sels de métaux alcalins qu'alcalino-terreux et ils sont aptes à absorber des quantités relativement importantes d'eau de mer. Leur capacité d'absorption de solutions aqueuses de chlorure de sodium est peu dépendante de la salinité de ces solutions; ils conservent sensiblement le même taux d'absorption avec des solutions aqueuses contenant de 9 g/l à 100 g/l de chlorure de sodium. Avec l'eau de mer, ou avec des solutions aqueuses de chlorure de calcium, leur pouvoir d'absorption est d'autant meilleur qu'ils sont plus riches en monomère cationique. Par ailleurs, ils sont très peu solubles dans l'eau même lorsqu'ils contiennent de très faibles doses de monomère réticulant et les gels polymères, obtenus après gonflement dans une solution aqueuse contenant 9 g/l de chlorure de sodium, présentent peu ou pas d'extractibles.

Les exemples suivants illustrent l'invention sans toutefois la limiter.

Les tests décrits dans ces exemples ont été réalisés de la façon suivante :
- La capacité d'absorption d'eau, désignée ci-après CO, est déterminée à 20°C, en agitant durant 60 minutes, 0,4 g de polymère dans 500 g d'eau pure bipermutée, puis en pesant le gel polymère obtenu égoutté. Le poids trouvé est ramené à 1 g de polymère sec;
- La capacité d'absorption de solution aqueuse saline, désignée ci-après CC, est déterminée à 20°C, en agitant durant 60 minutes, 2 g de polymère dans 500 g d'une solution aqueuse contenant 9 g/l de chlorure de sodium puis en pesant le gel polymère obtenu égoutté. Le poids trouvé est ramené à 1 g de polymère sec. De la même manière, on détermine la capacité d'absorption d'une solution aqueuse contenant 9 g/l de chlorure de calcium anhydre, désignée ci-après CCC, d'eau de mer synthétique dont la composition est donnée dans Handbook of Chemistry and Physics. page F 154. 64ème édition. édité par The Chemical Rubber Co., Cleveland. E.U.A., 1984, désignée ci-après COM et de solutions aqueuses contenant respectivement 50 g/l et 100 g/l de chlorure de sodium, désignées ci-après respectivement $CC_{50}$ et $CC_{100}$.

Le taux d'extractibles, désigné ci-après E, est déterminé de la manière suivante :
- on agite à 20°C, pendant 16 heures, 1 g de polymère à tester dans 200 g d'une solution aqueuse contenant 9 g/l de chlorure de sodium. On égoutte ensuite le gel polymère obtenu et on recueille le filtrat. Ensuite, d'une part, sur 100 cm$^3$ du filtrat, on dose les fonctions carboxyliques et carboxylates présentes et, d'autre part, après lyophilisation de 50 cm$^3$ de filtrat, on dose sur la poudre obtenue, l'azote présent par analyse élémentaire (méthode de DUMAS). Le résultat de ces dosages est exprimé en grammes de motifs monomériques dissous pour 100 g de polymère sec.

Exemple 1

On dissout, sous agitation, et à la température ambiante, dans 356,56 g d'eau permutée contenant 70,56 g (1,26 mole) d'hydroxyde de potassium successivement :

- 91 mg (0,46 mmole) d'acide bisacrylamidoacétique ;
- 98 mg (0.25 mmole) d'acide diéthylènetriaminopentaacétique ;
- 126 g (1,75 mole) d'acide acrylique ;
- 145,24 g (0,75 mole) d'acrylate de N,N-diméthylaminoéthyle quaternisé au chlorure de méthyle ;
- 357 mg (1,5 mmole) de persulfate de sodium,

puis on ajuste le poids de cette solution aqueuse, désignée ci-après solution A, à 638 g avec de eau permutée.

Dans un polymériseur, on chauffe à l'ébullition, sous agitation et en atmosphère inerte :

- 638 g de cyclohexane ;
- 3,5 d'éthylcellulose présentant un taux d'éthoxyle de 48 %,

puis on introduit en 90 minutes, au reflux, sous agitation et en atmosphère inerte, la solution A précédente. L'introduction terminée, on poursuit le chauffage au reflux et l'agitation pendant une heure puis on élimine par distillation azéotropique 240 g d'eau et ensuite, on refroidit le milieu réactionnel à la température ambiante. Le polymère cherché est ensuite filtré puis il est séché sous pression réduite à poids constant à 80°C. On obtient ainsi 325 g d'un polymère CMA/AK/AA/ABAA - 29,9945/50,3907/19,5964/0,0184, sous forme de perles blanches et présentant les caractéristiques suivantes :

- extrait sec : 92,4 %,
- taux d'absorption d'eau, CO : 128,3 g/l,
- taux d'absorption d'eau à 9 g/l de ClNa, $CC_9$ : 24,4 g/g,
- taux d'absorption d'eau à 9 g/l de $Cl_2Ca$, CCC : 17,6 g/g,
- taux d'absorption d'eau de mer, COM : 21 g/g,
- taux pondéral de monomère réticulant : 0,03 % environ.

Les paramètres de la réaction de polymérisation sont les suivants :

- concentration des monomères dans la phase aqueuse, Co : environ 50,1 %,
- rapport pondéral phase aqueuse sur phase huile: 0,9945,
- taux en initiateur : 60 mmoles pour 100 moles de monomères,
- taux et nature du colloïde protecteur : environ 1,1 % en poids par rapport au poids total des monomères, d'éthylcellulose présentant un taux d éthoxyle de 48 %,
- taux en agent chélatant : 10 mmoles pour 100 moles de monomères,
- initiateur : persulfate de sodium,
- phase huile : cyclohexane,
- température : ébullition de la phase huile,
- durée : 90 minutes.

Exemples 2 à 15

En utilisant les paramètres de polymérisation employés à l'exemple 1, on prépare les polymères CMA/AK/AA/ABAA x/a/b/0,0184 avec a = (100 - x - 0,0184)Tn et b = 100 - (x + 0,0184 + a) et où Tn représente le taux de neutralisation de l'acide acrylique, mentionnés dans le tableau I, dans lequel les taux d'absorption sont exprimés en grammes par gramme de polymère sec, CO, $CC_9$, $CC_{50}$, $CC_{100}$ CCC, COM et E conservant la signification donnée précédemment.

| N° | x | Tn | CO | $CC_9$ | CCC | COM | $CC_{50}$ | $CC_{100}$ | E |
|---|---|---|---|---|---|---|---|---|---|
| 1 | 29,9945 | 0,72 | 128,3 | 24,4 | 17,6 | 21 | 25 | 25 | 5,6 |
| 2 | 0 | 0,72 | | 50 | | 6,2 | 25 | 12 | |
| 3 | 10 | 0,72 | 250 | 41,5 | 4,8 | 11,4 | | | |
| 4 | 20 | 0,72 | 230 | 37 | 11,0 | 16,8 | | | |
| 5 | 40 | 0,72 | | 15,5 | 21,8 | 22 | | | 4,8 |
| 6 | 50 | 0,72 | 63 | 22,1 | 28,8 | 26,3 | | | |
| 7 | 60 | 0,72 | 85 | 30,1 | 32,5 | 27,1 | | | |
| 8 | 70 | 0,72 | 120 | 37,8 | 37,8 | 29,9 | | | 5,5 |
| 9 | 99 | 0,72 | | 54 | 52,6 | | 32 | 26 | |
| 10 | 30 | 0,0 | | 18,2 | | | | | 7,2 |
| 11 | 30 | 0,3 | | 11,0 | | | | | |
| 12 | 30 | 0,43 | | 9,9 | | | | | |
| 13 | 30 | 0,5 | | 11,7 | | | | | |
| 14 | 30 | 0,85 | | 29,3 | | | | | |
| 15 | 30 | 1 | | 31,1 | | | | | 7,6 |

## Revendications

**Revendications pour les Etats contractants suivants : AT, BE, CH, DE, DK, FR, GB, GR, IT, LI, LU, NL, SE**

1. Polymères hydrophiles, ampholytes, insolubles dans l'eau, gonflables a l'eau, caractérisés en ce qu'ils contiennent, a l'état polymérisé, en proportions molaires, de 0,001 à 0,1 % d'un monomère réticulant diéthylénique hydrosoluble possédant au moins une fonction carboxylique ou salifiée et de 99,999 à 99,9 % d'un mélange de 1 à 99 % d'acrylate de N,N-diméthylaminoéthyle salifié ou quaternisé et de 99 à 1 % d'un mélange, désigné M, de 1 à 99 % d'acide acrylique et de 99 à 1 % d'acrylate de sodium ou d'acrylate de potassium.

2. Polymères selon la revendication 1, caractérisés en ce que l'acrylate de N,N-diméthylaminoéthyle est quaternisé par du sulfate de diméthyle.

3. Polymères selon la revendication 1, caractérisés en ce que l'acrylate de N,N-diméthylaminoéthyle est quaternisé par du chlorure de méthyle.

4. Polymères selon l'une quelconque des revendications 1 à 3, caractérisés en ce que le mélange M indiqué à la revendication 1, contient de 20 à 50 % d'acide acrylique

5. Polymères selon l'une quelconque des revendications 1 a 4, caractérisés en ce que le monomère réticulant diéthylénique hydrosoluble est choisi dans le groupe constitué par l'acide bisacrylamidoacétique, l'acide diallyloxyacétique et leurs sels d'ammonium, de sodium ou de potassium.

6.  Polymères selon la revendication 4 ou 5, caractérisés en ce qu'ils contiennent, à l'état polymérisé, en proportions molaires, de 0,01 à 0,1 % de monomère réticulant et de 99,99 à 99,9 % d'un mélange de 30 à 80 % d'acrylate de N,N-diméthylaminoéthyle salifié ou quaternisé et de 70 à 20 % d'un mélange de 80 à 60 % d'acrylate de potassium et de 20 à 40 % d'acide acrylique.

7.  Procédé d'obtention des polymères selon l'une quelconque des revendications 1 à 5, caractérisé en ce que l'on effectue la polymérisation des monomères choisis en suspension à une température supérieure à 50°C dans une phase organique non miscible à l'eau mais formant un azéotrope avec l'eau, en présence d'un initiateur de polymérisation hydrosoluble et d'un colloïde protecteur, puis en fin de polymérisation l'on réalise une déshydratation azéotropique du milieu réactionnel et isole par filtration les polymères recherchés.

8.  Procédé selon la revendication 7, caractérisé en ce que l'on introduit la solution aqueuse des monomères choisis à une concentration voisine de 50 % en poids et contenant de 30 à 100 mmoles d'un initiateur de polymérisation hydrosoluble pour 100 moles de monomères dans une phase organique à l'ébullition, de préférence du cyclohexane, contenant de 0,5 à 2 % en poids par rapport au poids des monomères de colloïde protecteur et le rapport pondéral phase aqueuse à phase organique est compris entre 0,9 et 1,1.

9.  Utilisation des polymères selon l'une quelconque des revendications 1 à 6, comme agents absorbants de fluides aqueux contenant en solution des sels minéraux choisis dans le groupe constitué par les sels de métaux alcalins et les sels de métaux alcalino-terreux solubles dans l'eau.

10. Utilisation des polymères selon l'une quelconque des revendications 1 à 6 comme agents absorbants d'eau de mer.

**Revendications pour l'Etat contractant suivant : ES**

1.  Procédé d'obtention de polymères hydrophiles, ampholytes, insolubles dans l'eau, gonflables à l'eau, contenant, à l'état polymérisé, en proportions molaires, de 0,001 à 0,1 % d'un monomère réticulant diéthylénique hydrosoluble possédant au moins une fonction carboxylique ou salifiée et de 99,999 à 99,9 % d'un mélange de 1 à 99 % d'acrylate de N,N-diméthylaminoéthyle salifié ou quaternisé et de 99 à 1 % d'un mélange, désigné M, de 1 à 99 % d'acide acrylique et de 99 à 1 % d'acrylate de sodium ou d'acrylate de potassium caractérisé en ce que l'on effectue la polymérisation des monomères choisis en suspension à une température supérieure à 50 °C dans une phase organique non miscible à l'eau mais formant un azéotrope avec l'eau, en présence d'un initiateur de polymérisation hydrosoluble et d'un colloïde protecteur, puis en fin de polymérisation l'on réalise une déshydratation azéotropique du milieu réactionnel et isole par filtration les polymères recherchés.

2.  Procédé selon la revendication 1, caractérisé en ce que l'on introduit la solution aqueuse des monomères choisis à une concentration voisine de 50 % en poids et contenant de 30 à 300 mmoles d'un initiateur de polymérisation hydrosoluble pour 100 moles de monomères dans une phase organique à l'ébullition, de préférence du cyclohexane, contenant de 0,5 à 2 % en poids par rapport au poids des monomères de colloïde protecteur et le rapport pondéral phase aqueuse à phase organique est compris entre 0,9 et 1,1.

3.  Procédé selon la revendication 1 ou 2, caractérisé en ce que l'acrylate de N,N-diméthylaminoéthyle est quaternisé par du sulfate de diméthyle.

4.  Procédé selon la revendication 1 ou 2, caractérisé en ce que l'acrylate de N,N-diméthylaminoéthyle est quaternisé par du chlorure de méthyle.

5.  Procédé selon la revendication 1 ou 2, caractérisé en ce que le mélange M contient de 20 à 50 % d'acide acrylique.

6.  Procédé selon la revendication 1 ou 2, caractérisé en ce que le monomère réticulant diéthylénique hydrosoluble est choisi dans le groupe constitué par l'acide bisacrylamidoacétique, l'acide diallyloxyacétique et leurs sels d'ammonium, de sodium ou de potassium.

7.  Procédé selon la revendication 5 ou 6, caractérisé en ce que l'on prépare des polymères contenant à l'état polymérisé, en proportions molaires, de 0,01 à 0,1 % de monomère réticulant et de 99,99 à 99,9 % d'un mélange de 30 à 80 % d'acrylate de N,N-diméthylaminoéthyle salifié ou quaternisé et de 70 à 20 % d'un mélange de 80 à 60 % d'acrylate de potassium et de 20 à 40 % d'acide acrylique.

8.  Utilisation des polymères obtenus par le procédé de l'une des revendications 1 à 7, comme agents absorbants de fluides aqueux contenant en solution des sels minéraux choisis dans le groupe constitué par les sels de métaux alcalins et les sels de métaux alcalino-terreux solubles dans l'eau.

9.  Utilisation des polymères obtenus par le procédé de l'une des revendications 1 à 7 comme agents absorbants d'eau de mer.


**Patentansprüche**

**Patentansprüche für folgende Vertragsstaaten : AT, BE, CH, DE, DK, FR, GB, GR, IT, LI, LU, NL, SE**

1.  Hydrophile, amphotere Polymere, die in Wasser unlöslich und quellbar sind, **dadurch gekennzeichnet**, daß sie im polymerisierten Zustand in molaren Anteilen 0,001 bis 0,1 % eines zwei Ethylengruppen aufweisenden, wasserlöslichen, monomeren Vernetzungsmittels, welches mindestens eine Carboxylfunktion oder in ein Salz umgewandelte Funktion aufweist, und 99,999 bis 99,9 % einer Mischung aus 1 bis 99 % in ein Salz umgewandeltem oder quaternisiertem N,N-Dimethylaminoethylacrylat und 99 bis 1 % einer mit M bezeichneten Mischung aus 1 bis 99 % Acrylsäure und 99 bis 1 % Natriumacrylat oder Kaliumacrylat enthalten.

2.  Polymere gemäß Anspruch 1, dadurch gekennzeichnet, daß das N,N-Dimethylaminoethylacrylat mit Dimethylsulfat quaternisiert ist.

3.  Polymere nach Anspruch 1, dadurch gekennzeichnet, daß das N,N-Dimethylaminoethylacrylat mit Methylchlorid quaternisiert ist.

4.  Polymere nach einem der Ansprüche 1 bis 3, dadurch gekennzeichnet, daß die in Anspruch 1 angegebene Mischung M 20 bis 50 % Acrylsäure enthält.

5.  Polymere nach einem der Ansprüche 1 bis 4, dadurch gekennzeichnet, daß das zwei Ethylengruppen aufweisende, wasserlösliche monomere Vernetzungsmittel ausgewählt ist aus der Bisacrylamidoessigsäure, Diallyloxyessigsäure und deren Ammonium-, Natrium- oder Kalium-Salze umfassenden Gruppe.

6.  Polymere nach Anspruch 4 oder 5, dadurch gekennzeichnet, daß sie in polymerisiertem Zustand in molaren Anteilen 0,01 bis 0,1 % monomeres Vernetzungsmittel und 99,99 bis 99,9 % einer Mischung aus 30 bis 80 % in ein Salz umgewandeltem oder quaternisiertem N,N-Dimethylaminoethylacrylat und 70 bis 20 % einer Mischung aus 80 bis 60 % Kaliumacrylat und 20 bis 40 % Acrylsäure enthalten.

7.  Verfahren zum Herstellen von Polymeren gemäß einem der Ansprüche 1 bis 5, dadurch gekennzeichnet, daß man die Polymerisation der ausgewählten Monomeren in Suspension bei einer Temperatur von mehr als 50°C in einer organischen Phase, die mit Wasser nicht mischbar ist, aber mit Wasser ein Azeotrop bildet, in Gegenwart eines wasserlöslichen Polymerisationsinitiators und eines Schutzkolloids durchführt, bis man zu Ende der Polymerisation eine azeotrope Entwässerung des Reaktionsmediums feststellt, und die gewünschten Polymeren durch Filtration isoliert.

8.  Verfahren nach Anspruch 7, dadurch gekennzeichnet, daß man die wäßrige Lösung der ausgewählten Monomeren mit einer Konzentration nahe bei 50 Gew.-% und mit einem Gehalt von 30 bis 300 mmol eines wasserlöslichen Polymerisationsinitiators auf 100 mol Monomere in eine zum Sieden gebrachte organische Phase, vorzugsweise Cyclohexan, hineingibt, welche 0,5 bis 2 Gew.-% Schutzkolloid im Vergleich zum Gewicht der Monomeren enthält, und das Gewichtsverhältnis der wäßrigen Phase zur organischen Phase im Bereich von 0,9 bis 1,1 liegt.

9.  Verwendung der Polymeren nach einem der Ansprüche 1 bis 6 als Absorptionsmittel für wäßrige Flüssigkeiten, welche Mineralsalze in Lösung enthalten, die aus der aus den in Wasser löslichen Alkalimetallsalzen und Erdalkalimetallsalzen bestehenden Gruppe ausgewählt sind.

**10.** Verwendung der Polymeren nach einem der Ansprüche 1 bis 6 als Absorptionsmittel für Meerwasser.

**Patentansprüche für folgenden Vertragsstaat : ES**

**1.** Verfahren zum Herstellen von hydrophilen, amphoteren Polymeren, die in Wasser unlöslich und quellbar sind und im polymerisierten Zustand in molaren Anteilen 0,001 bis 0,1 % eines zwei Ethylengruppen aufweisenden, wasserlöslichen monomeren Vernetzungsmittels enthalten, welches mindestens eine Carboxylfunktion oder in ein Salz umgewandelte Funktion aufweist, und 99,999 bis 99,9 % einer Mischung aus 1 bis 99 % in ein Salz umgewandeltem oder quaternisiertem N,N-Dimethylaminoethylacrylat und 99 bis 1 % einer mit M bezeichneten Mischung aus 1 bis 99 % Acrylsäure und 99 bis 1 % Natriumacrylat oder Kaliumacrylat, **dadurch gekennzeichnet**, daß man die Polymerisation der ausgewählten Monomeren in Suspension bei einer Temperatur von mehr als 50°C in einer mit Wasser nicht mischbaren, aber mit Wasser ein Azeotrop bildenden organischen Phase in Gegenwart eines wasserlöslichen Polymerisationsinitiators und eines Schutzkolloids durchführt, bis man zu Ende der Reaktion eine azeotrope Entwässerung des Reaktionsmediums feststellt, und die gewünschten Polymeren durch Filtration isoliert.

**2.** Verfahren nach Anspruch 1, dadurch gekennzeichnet, daß man die wäßrige Lösung der ausgewählten Monomeren mit einer Konzentration nahe bei 50 Gew.-% und mit einem Gehalt von 30 bis 300 mmol eines wasserlöslichen Polymerisationsinitiators auf 100 mol Monomere in eine zum Sieden gebrachte organische Phase, vorzugsweise Cyclohexan, hineingibt, welche 0,5 bis 2 Gew.-% Schutzkolloid im Vergleich zum Gewicht der Monomeren enthält, und das Gewichtsverhältnis der wäßrigen Phase zur organischen Phase im Bereich von 0,9 bis 1,1 liegt.

**3.** Verfahren nach Anspruch 1 oder 2, dadurch gekennzeichnet, daß das N,N-Dimethylaminoethylacrylat mit Dimethylsulfat quaternisiert ist.

**4.** Verfahren nach Anspruch 1 oder 2, dadurch gekennzeichnet, daß das N,N-Dimethylaminoethylacrylat mit Methylchlorid quaternisiert ist.

**5.** Verfahren nach Anspruch 1 oder 2, dadurch gekennzeichnet, daß die Mischung M 20 bis 50 % Acrylsäure enthält.

**6.** Verfahren nach Anspruch 1 oder 2, dadurch gekennzeichnet, daß das zwei Ethylengruppen aufweisende, wasserlösliche monomere Vernetzungsmittel ausgewählt ist aus der Bisacrylamidoessigsäure, Diallyloxyessigsäure und deren Ammonium-, Natrium- oder Kalium-Salze umfassenden Gruppe.

**7.** Verfahren nach Anspruch 5 oder 6, dadurch gekennzeichnet, daß man Polymere herstellt, welche in polymerisiertem Zustand in molaren Anteilen 0,01 bis 0,1 % monomeres Vernetzungsmittel und 99,99 bis 99,9 % einer Mischung aus 30 bis 80 % in ein Salz umgewandeltem oder quaternisiertem N,N-Dimethylaminoethylacrylat und 70 bis 20 % einer Mischung aus 80 bis 60 % Kaliumacrylat und 20 bis 40 % Acrylsäure enthalten.

**8.** Verwendung der durch das Verfahren nach einem der Ansprüche 1 bis 7 erhaltenen Polymeren als Absorptionsmittel für wässrige Flüssigkeiten, die Mineralsalze in Lösung enthalten, welche aus der aus den wasserlöslichen Alkalimetallsalzen und Erdalkalimetallsalzen bestehenden Gruppe ausgewählt sind.

**9.** Verwendung der nach dem Verfahren eines der Ansprüche 1 bis 7 erhaltenen Polymeren als Absorptionsmittel für Meerwasser.

**Claims**

**Claims for the following Contracting States : AT, BE, CH, DE, DK, FR, GB, GR, IT, LI, LU, NL, SE**

**1.** Ampholyte hydrophilic polymers insoluble in water and liable to swelling by water, characterised in that in the polymerised state they contain, in molar proportions, 0.001 to 0.1% of a water-soluble, cross-linking, diethylene monomer having at least one carboxylic or salified function, together with 99.999 to 99.9% of a mixture consisting of 1 to 99% of salified or quaternised N,N-dimethylaminoethyl acrylate with 99 to 1% of a mixture, designated M, of 1 to 99% of acrylic acid and 99 to 1% of sodium acrylate or potassium acrylate.

2. Polymers according to Claim 1, characterised in that the N,N-dimethylaminoethyl acrylate is quaternised by dimethyl sulphate.

3. Polymers according to Claim 1, characterised in that the N,N-dimethylaminoethyl acrylate is quaternised by methyl chloride.

4. Polymers according to any one of Claims 1 to 3, characterised in that the mixture M defined in Claim 1 contains from 20 to 50% of acrylic acid.

5. Polymers according to any one of Claims 1 to 4, characterised in that the water soluble cross-linking diethylene monomer is selected from the group consisting of bisacrylamidoacetic acid, diallyloxyacetic acid, and their ammonium, sodium or potassium salts.

6. Polymers according to Claim 4 or Claim 5, characterised in that, in the polymerised state, they contain, in molar proportions, from 0.01 to 0.1% of cross-linking monomer and from 99.99 to 99.9% of a mixture consisting of 30 to 80% of salified or quaternised N,N-dimethylaminoethyl acrylate with 70 to 20% of a mixture of 80 to 60% of potassium acrylate and 20 to 40% of acrylic acid.

7. A process for obtaining polymers according to any one of Claims 1 to 5, characterised in that the polymerisation of the selected monomers is carried out in suspension at a temperature greater than 50°C, in an organic phase which is not miscible with water but which forms an azeotrope with water, in the presence of a water-soluble polymerisation initiator and a protective colloid, and then, when polymerisation is completed, the reaction medium is azeotropically dehydrated and the required polymers are isolated by filtration.

8. A process according to Claim 7, characterised in that the aqueous solution of the selected monomers, at a concentration close to 50% by weight and containing from 30 to 300 mmoles of a water-soluble polymerisation initiator per 100 mole of monomers, is introduced into an organic phase in ebullition, the latter being preferably cyclohexane and containing from 0.5 to 2% by weight of protective colloid with respect to the weight of the monomers, while the ratio of the aqueous phase to the organic phase is between 0.9 and 1.1 by weight.

9. Use of the polymers according to any one of Claims 1 to 6 as absorbing agents for aqueous fluids containing, in solution, mineral salts selected from the group consisting of alkali metal salts and water-soluble alkaline earth metal salts.

10. Use of the polymers according to any one of Claims 1 to 6 as agents for absorbing sea water.

**Claims for the following Contracting State : ES**

1. A process for obtaining ampholyte hydrophilic polymers, insoluble in water and liable to swelling by water, containing in the polymerised state, in molar proportions, 0.001 to 0.1% of a water-soluble, cross-linking, diethylene polymer having at least one carboxylic or salified function, together with 99.99 to 99.9% of a mixture consisting of 1 to 99% of salified or quaternised N,N-dimethylaminoethyl acrylate with 99 to 1% of a mixture, designated M, of 1 to 99% of acrylic acid and from 99 to 1% of sodium acrylate or potassium acrylate, characterised in that the polymerisation of the selected monomers is carried out in suspension at a temperature greater than 50°C, in an organic phase which is not miscible with water but which forms an azeotrope with water, in the presence of a water-soluble polymerisation initiator and a protective colloid, and then, when polymerisation is completed, the reaction medium is azeotropically dehydrated and the required polymers are isolated by filtration.

2. A process according to Claim 1, characterised in that the aqueous solution of the selected monomers, at a concentration close to 50% by weight and containing from 30 to 300 mmoles of a water soluble polymerisation initiator per 100 mole of monomers, is introduced into an organic phase in ebullition, the latter being preferably cyclohexane and containing from 0.5 to 2% by weight of protective colloid with respect to the weight of the monomers, while the ratio of the aqueous phase to the organic phase is between 0.9 and 1.1 by weight.

3.  A process according to Claim 1 or Claim 2, characterised in that the N,N-dimethylaminoethyl acrylate is quaternised by dimethyl sulphate.

4.  A process according to Claim 1 or Claim 2, characterised in that the N,N-dimethylaminoethyl acrylate is quaternised by methyl chloride.

5.  A process according to Claim 1 or Claim 2, characterised in that the mixture M contains from 20 to 50% of acrylic acid.

6.  A process according to Claim 1 or Claim 2, characterised in that the water soluble cross-linking diethylene monomer is selected from the group consisting of bisacrylamidoacetic acid, diallyloxyacetic acid, and their ammonium, sodium or potassium salts.

7.  A method according to Claim 5 or Claim 6, characterised in that, in the polymerised state, they contain, in molar proportions, from 0.01 to 0.1% of cross linking monomer and from 99.99 to 99.9% of a mixture consisting of 30 to 80% of salified or quaternised N,N-dimethylaminoethyl acrylate with 70 to 20% of a mixture of 80 to 60% of potassium acrylate and 20 to 40% of acrylic acid.

8.  Use of polymers obtained by the method of one of Claims 1 to 7 as absorbing agents for aqueous fluids containing, in solution, mineral salts selected from the group consisting of alkali metal salts and water-soluble alkaline earth metal salts.

9.  Use of polymers obtained by the method of one of Claims 1 to 7 as agents for absorbing sea water.